# EUROPEAN PATENT SPECIFICATION

(11) **EP 2 679 815 B1**
(45) Date of publication and mention of the grant of the patent: **01.02.2017**
(21) Application number: 12382251.2
(22) Date of filing: 26.06.2012
(51) Int. Cl.: F03D 7/02, F16C 17/04, F16C 17/08, F16C 19/08, F16C 19/52, F16C 21/00, F03D 80/70, F16C 39/02

(54) **Wind turbine with a rotating assembly**
Windturbine mit einer Rotationsanordnung
Eolienne ayant un ensemble rotatif

(43) Date of publication of application: 01.01.2014
(73) Proprietor: ALSTOM Renewable Technologies, 38100 Grenoble (FR)
(72) Inventor: Canedo Pardo, Santiago, 08037 Barcelona (ES)
(74) Representative: ZBM Patents - Zea, Barlocci & Markvardsen

(56) References cited:
- EP-A1- 1 571 334
- DE-A1-102005 001 344
- DE-U1-202007 002 609
- US-A1- 2011 233 939

## Description

A wind turbine is disclosed herein having a rotating assembly.

In general, rotating assemblies for wind turbines are disclosed herein comprising two mutually rotatable parts between which a bearing comprising inner and outer bearing races is provided.

### BACKGROUND ART

Rotating assemblies in wind turbine rotating assemblies, such as for example pitch or yaw bearing assemblies, are subjected to high dynamic loads and moments, specially bending loads, during wind turbine operation. Such loads directly affect the operating life of the bearing in the rotating assembly of the wind turbine.

Deformations in the surrounding components of such bearing assemblies are not regular. As a consequence, the distribution of contact forces and contact angles on the bearing assembly is not uniform. This can give rise to brinelling in bearing races.

Therefore, bearings in known wind turbine rotating assemblies may prematurely fail. Since bearings are usually difficult to access, their failure often involves costly operations of maintenance.

This problem is being dealt with by the most important companies in this field. In this regard, attempts to at least reduce the impact of dynamic loads on bearing assemblies have been proposed. They are mainly based on designing the surrounding components of the bearing assembly, such as the main frame and the tower top of the wind turbine, such that they are of a suitable stiffness for a proper load distribution in the bearings while reducing local peaks.

Further attempts have been also proposed for reducing the impact of dynamic loads on bearing assemblies. They consist for example in providing reinforced bearings. Bearings may be reinforced, for example, by increasing the diameter of the raceways, the number of rows, the number and diameter of the balls, the length of the bearings, etc. However, these solutions for reinforcing the bearing are not good enough since a big effort is required to improve the design of the surrounding components in order to achieve the optimal geometry for load sharing. An increase in the bearing diameter affects the main frame and the tower top dimensions so the global impact in cost is high and may involve manufacturing limitations and adversely affect transportability of components.

Still a further alternative for at least increasing the operating life of the rotating assemblies in a wind turbine and thus reducing maintenance and replacement costs is proposed in EP2175133. This document provides a bearing assembly in which an alternate load path for extreme loads is defined. Such alternate load path is formed between the bearing races in a way that at least a portion of the extreme loads is diverted away from the bearing rolling elements. The alternate load path in the bearing races requires shaping of the bearing itself. This involves machining operations resulting in costs becoming undesirably high.

US2011233939 discloses yaw bearing devices including roller bearings with balls arranged between an inner ring of a nacelle base plate and an outer ring of a wind turbine tower. Yaw devices are also disclosed including sliding bearings and rolling elements that are disposed between the tower and the nacelle of the wind turbine. The sliding bearings and the rolling elements, which are both part of the wind turbine yaw bearing, are always in contact with the tower and the nacelle.

Therefore, a need still remains for at least reducing deformations in bearings of rotating assemblies in a wind turbine when in use.

### SUMMARY

A wind turbine is disclosed herein having a rotating assembly according to claim 1.

The rotating assembly of the present wind turbine comprises first and second mutually rotatable parts. In some embodiments, for example, the first part of the rotating assembly may correspond to a main frame in a wind turbine or it may be associated therewith. The main frame may be the nacelle main frame. In some embodiments, the second part of the rotating assembly may correspond to a wind turbine tower or if may be associated therewith.

The rotating assembly further comprises a bearing assembly. The bearing assembly is provided between said first and second mutually rotatable parts in the wind turbine. This bearing assembly comprises an inner bearing race and an outer bearing race. The bearing assembly of the present rotating assembly is the yaw bearing assembly of a wind turbine.

The rotating assembly further comprises a gliding pad assembly. The gliding pad assembly is arranged between the first part (or the second part) and the bearing assembly of the wind turbine.

The gliding pad assembly is advantageously adapted to be positioned relative to the above mentioned wind turbine parts. This positioning of the gliding pad assembly is suitable for transmitting extreme loads between the first and the second mutually rotatable parts of the wind turbine. Of course the positioning of the gliding pad assembly is such that the above two elements can be rotated to each other.

In preferred embodiments, the gliding pad assembly may be attached to the inner bearing race or the outer bearing race in the bearing assembly such that the gliding pad assembly can be moved relative to the main frame. In this case, the gliding pad assembly may extend radially covering an angle ranging from 10 to 90° of the circumference of the bearing assembly.

In alternative embodiments, the gliding pad assembly may be attached to the first part of the rotating assembly, that is, the main frame of the wind turbine.

In any of the above embodiments, the rotating assembly allows loads to be efficiently reduced in the most loaded areas of the bearing assembly.

This is carried out through the provision of the gliding pad assembly provided between the first or the second rotatable parts and the bearing assembly in the wind turbine.

In some embodiments of this rotating assembly, adjusting means may be provided. Said adjusting means may be adapted for adjusting any clearances between the gliding pad assembly and the first or second mutually rotatable parts or between the gliding pad assembly and the inner or outer bearing races of the bearing assembly. In some embodiments, the adjusting means may be mechanical means such as a screw shaft or the like. Rotation of the adjusting means result in the displacement of the gliding pad assembly a suitable distance for adjusting clearances. Other suitable adjusting means known in the art may be alternatively used, such as hydraulic means, provided that they allow for easily and properly adjusting the gliding pad assembly.

The gliding pad assembly may be adapted to be slidingly fitted between the first or the second mutually rotatable parts and the inner or the outer bearing races of the bearing assembly allowing rotation of the first and the rotatable parts to each other. In this respect, it is preferred that the gliding pad assembly comprises at least one low-friction surface.

In some cases, the gliding pad assembly may be integrally formed with the first or the second mutually rotatable parts. However, the gliding pad assembly could be integrally formed with the inner or the outer bearing races of the bearing assembly.

The gliding pad assembly may be a unitary piece, that is, it may comprise a single gliding pad. However, in some embodiments it could be preferred that the gliding pad assembly is formed of two or more gliding pads. In this case, one of the gliding pads may be attached to the first or the second rotatable parts and the other of the gliding pads may be attached to the inner or the outer bearing races of the bearing assembly. In the embodiment of the gliding pad assembly formed of two or more pads, the gliding pads may be coupled to one another through any suitable means such as through a support piece.

With the above rotating assembly, the area where loads are concentrated is altered and the value of loads on the bearing races is reduced. Not all the loads coming from the main frame are transmitted directly to the outer bearing race but they are distributed between the inner and the outer bearing races. This solution advantageously prevents the bearing assembly from being subjected to flexural loading between the bearing races. This also allows load eccentricity to be advantageously reduced even from the structural point of view of the wind turbine tower.

Additional objects, advantages and features of embodiments of the present wind turbine will become apparent to those skilled in the art upon examination of the description, or may be learned by practice thereof.

### BRIEF DESCRIPTION OF THE DRAWINGS

Particular embodiments will be described in the following by way of non-limiting examples, with reference to the appended drawings, in which:
Figure 1 is a part view of one rotating assembly in a yaw bearing assembly;
Figures 2 and 3 are detail views of the embodiment of the rotating assembly in figure 1 showing the gliding pad assembly and diagrammatically depicting the adjusting means; and
Figure 4 is a detail view of the present rotating assembly showing the area of Embodiments of the present rotating assembly 100 for a wind turbine are described herein according to the figures. The present description corresponds to a case in which the rotating assembly 100 comprises a bearing assembly which is the yaw bearing assembly 150 in a wind turbine.

In the particular example of the figures a yaw bearing assembly 150 is shown. The yaw bearing assembly 150 controls rotation of the wind turbine nacelle 200 relative to the tower 215. In particular, the yaw bearing assembly 150 serves the purpose of ensuring a proper orientation of the wind turbine nacelle 200 relative to wind direction. When it is determined that the wind turbine rotor is aligned to wind direction, the position of the rotor is held stationary. This is carried out through the use of a brake assembly 160. When it is determined that the wind turbine rotor is misaligned to wind direction, the brake assembly 160 is at least partially released and the nacelle 200 is driven in rotation by means of a number of yaw drive motors M, typically of the order of 4 to 8 motors M, to become aligned to wind direction. Yaw drive motors M are installed on the main frame 205 of the nacelle 200 through a motor support 170.

In addition to the above mentioned yaw bearing assembly 150, the rotating assembly 100 comprises first and second mutually rotatable parts 205, 215. The first part of the rotating assembly 100 corresponds to the main frame 205 of the nacelle 200. The second part of the rotating assembly 100 corresponds to the wind turbine tower 215.

As shown in the figures, the yaw bearing assembly 150 of the rotating assembly 100 is provided between the first and second mutually rotatable parts 205, 215. The yaw bearing assembly 150 comprises an inner bearing race 151, an outer bearing race 152 and a set of balls 153. Balls 153 are provided between the inner and the outer bearing races 151, 152.

The inner bearing race 151 of the yaw bearing assembly 150 shown in the figures is attached to the second part of the rotating assembly 100, that is, the wind turbine tower 215. The first and second mutually rotatable parts 205, 215 are driven by means of the above mentioned drive motors M through a suitable ring gear 180.

The rotating assembly 150 shown in the figures further comprises a gliding pad assembly 300. In this particular embodiment, the gliding pad assembly 300 is arranged between the first part 205 and the bearing assembly 150. This gliding pad assembly 300 comprises three gliding pads 310. The gliding pads 310 are coupled to one another through a support piece.

The gliding pad assembly 300 allows extreme loads to be suitably transmitted between the main frame 205 and the tower 215 while allowing the former to be rotated relative to the latter.

In the particular embodiment shown in the figures, the gliding pad assembly 300 is integrally formed with the inner bearing race 151 in the yaw bearing assembly 150. The gliding pad assembly is allowed to slide relative to the main frame 205. For this purpose, a low-friction inclined surface 305 is provided on the gliding pad assembly 150.

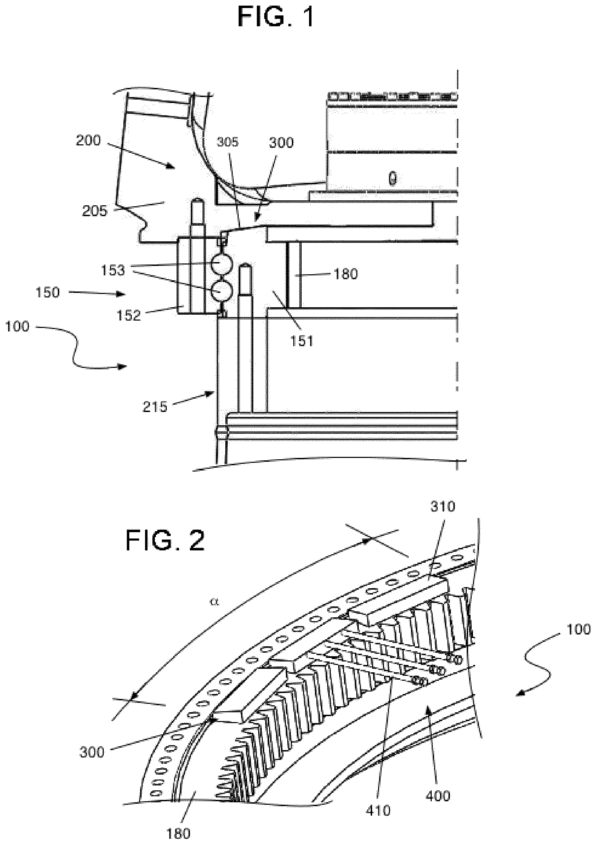

The gliding pads 310 of the gliding pad assembly 300 extend radially covering an angle α ranging from 10 to 90° of the circumference of the bearing assembly 150 as shown in figure 2. The gliding pad assembly 300 is arranged in a location on the inner bearing race 151 corresponding to the region where the wind turbine rotor hub is installed, i.e. in a wind turbine front portion.

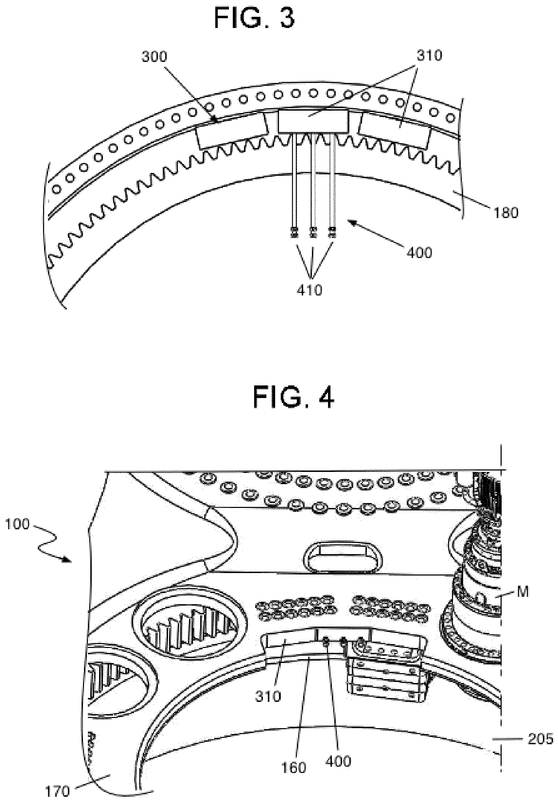

The rotating assembly 100 further comprises adjusting means 400 for easily adjusting any clearances which may exist between the gliding pad assembly 150 and the main frame 205 of the nacelle 200. In the particular embodiment shown in figures 2 and 3, the adjusting means 400 comprise a screw shaft 410. Rotation of the screw shaft 410 results in the displacement of the gliding pad assembly 300 a suitable distance for adjusting clearances. Rotation of the screw shaft 410 may be manual or through suitable motor means. The gliding pads 310 can be thus radially adjusted thanks to the inclined surface 305 which is brought into contact with the main frame 205.

The gliding pads 310 contribute to resist peak loads thus avoiding damages in the bearing races 151, 152. In general, loads on bearing races 151, 152 are reduced as well as the eccentricity of the loads transferred to the tower 215. Therefore, loads acting on the bearing can be advantageously reduced. The yaw bearing assembly 150 can be thus designed to resist lower bending loads or it can be mounted on an existing design to resist higher loads by using the same bearing assembly 150. Furthermore, as the gliding pads 310 slide when the first and second parts are rotated a frictional torque is provided which together with the yaw bearing assembly 150 aids to resist aerodynamic rotating loads.

Although only a number of particular embodiments and examples of the rotating assembly for a wind turbine have been disclosed herein, it will be understood by those skilled in the art that other alternative embodiments and/or uses and obvious modifications and equivalents thereof are possible. Furthermore, the present claims cover all possible combinations of the particular embodiments described. Reference signs related to drawings and placed in parentheses in a claim, are solely for attempting to increase the intelligibility of the claim, and shall not be construed as limiting the scope of the claim. Thus, the scope of the present disclosure should not be limited by particular embodiments, but should be determined only by a fair reading of the claims that follow.

## Claims

1. A wind turbine comprising:
- a nacelle (200) having a main frame (205);
- a hub provided with blades and rotatably mounted to the nacelle (200);
- a tower (215) rotatably supporting the nacelle (200);
- a yaw bearing assembly (150) provided between the main frame (205) and the tower (215); and
- at least one rotating assembly (100) for rotation of the nacelle main frame (205) relative to the tower (215), the rotating assembly (100) comprising a gliding pad assembly (300) arranged in addition to the yaw bearing assembly (150), wherein the gliding pad assembly (300) is arranged between the wind turbine main frame (205) and
a bearing race (151) attached to the wind turbine tower (215), for transmitting extreme loads between the main frame (205) and the tower (215),
**characterized in that** the gliding pad assembly (300) extends radially covering an angle (α) ranging from 10 to 90° of the circumference of the bearing assembly (150) arranged in a location on the inner bearing race (151) corresponding to a wind turbine front portion.

2. The wind turbine of claim 1, wherein the gliding pad assembly (300) is attached to the main frame (205) and capable of being moved relative to the bearing race (151) attached to the wind turbine tower (215).

3. The wind turbine of claim 1 or 2, wherein the bearing assembly (150) is a ball bearing comprising a set of balls (153) provided between the inner bearing race (151) and an outer bearing race (152).

4. The wind turbine (100) of any of the claims 1-3, wherein it further includes means (400) for adjusting any clearances between the gliding pad assembly (300) and the main frame (205) or the tower (215) or between the gliding pad assembly (300) and the yaw bearing assembly (150).

5. The wind turbine of any of the preceding claims, wherein the gliding pad assembly (300) is adapted to be slidingly fitted between the main frame (205) or the tower (215) and the yaw bearing assembly (150) allowing rotation of the main frame (205) and the tower (215) to each other.

6. The wind turbine of any of the preceding claims, wherein the gliding pad assembly (300) is integrally formed with the main frame (205) or the tower (215).

7. The wind turbine of any of the preceding claims, wherein the gliding pad assembly (300) is integrally formed with the yaw bearing assembly (150).

8. The wind turbine of any of the preceding claims, wherein the gliding pad assembly (300) comprises at least one low-friction surface (305).

9. The wind turbine of any of the preceding claims, wherein the gliding pad assembly (300) is a unitary piece.

10. The wind turbine of any of the preceding claims, wherein the gliding pad assembly (300) is formed of at least two parts, one being attached to the main frame (205) or the tower (215) and the other being attached to the yaw bearing assembly (150).

11. The wind turbine of any of the preceding claims, wherein the gliding pad assembly (300) is formed of at least two gliding pads (310) coupled to one another and arranged between the main frame (205) or the tower (215) and the bearing assembly (150).

12. The wind turbine of claim 11, wherein it further comprises a support piece for coupling said gliding pads (310) to one another.

13. The wind turbine of any of the preceding claims, wherein the gliding pad assembly (300) is attached to one portion of the main frame (205) corresponding to a portion where the hub is installed.

## Patentansprüche

1. Eine Windturbine umfassend:
- eine Gondel (200), die einen Hauptrahmen (205) hat;
- eine Nabe, die mit Blättern versehen ist und an der Gondel (200) montiert ist;
- einen Turm (215), der die Gondel (200) drehbar trägt;
- eine zwischen dem Hauptrahmen (205) und dem Turm (215) bereitgestellte Gierlageranordnung (150); und
- mindestens eine drehbare Anordnung (100) zur Drehung des Gondelhauptrahmens (205) bezüglich des Turms (215), wobei die drehbare Anordnung (100) eine Gleitschuhanordnung (300) umfasst, die zusätzlich zu der Gierlageranordnung (150) angeordnet ist, wobei die Gleitschuhanordnung (300) zwischen dem Windturbinenhauptrahmen (205) und einem an dem Windturbinenturm (215) befestigten Lagerring (151) zur Übertragung von extremen Belastungen zwischen dem Hauptrahmen (205) und dem Turm (215) angeordnet ist,
**dadurch gekennzeichnet, dass** die Gleitschuhanordnung (300) sich radial in einem Winkelbereich (α) von 10 bis 90° der Kreislinie der in einer einem Vorderteil der Windturbine entsprechenden Position auf dem inneren Lagerring (151) angeordneten Lageranordnung (150) erstreckt.

2. Die Windturbine des Anspruchs 1, wobei die Gleitschuhanordnung (300) an dem Hauptrahmen (205) befestigt ist und bezüglich des an dem Windturbinenturm (215) befestigten Lagerrings (151) bewogen werden kann.

3. Die Windturbine des Anspruchs 1 oder 2, wobei die Lageranordnung (150) ein Kugellager umfassend eine Reihe von zwischen dem inneren Lagerring (151) und einem äußeren Lagerring (152) bereitgestellten Kugeln (153) ist.

4. Die Windturbine von einem der Ansprüche 1-3, wobei sie weiterhin ein Mittel (400) zur Einstellung von jedweden Abständen zwischen der Gleitschuhanordnung (300) und dem Hauptrahmen (205) oder dem Turm (215) oder zwischen der Gleitschuhanordnung (300) und der Gierlageranordnung (150) umfasst.

5. Die Windturbine von einem der vorhergehenden Ansprüche, wobei die Gleitschuhanordnung (300) angepasst ist, um verschiebbar zwischen dem Hauptrahmen (205) oder dem Turm (215) und der Gierlageranordnung (150) eingepasst zu werden, wobei eine Drehung des Hauptrahmens (205) und des Turms (215) bezüglich einander möglich ist.

6. Die Windturbine von einem der vorhergehenden Ansprüche, wobei die Gleitschuhanordnung (300) einstückig mit dem Hauptrahmen (205) oder dem Turm (215) gebildet ist.

7. Die Windturbine von einem der vorhergehenden Ansprüche, wobei die Gleitschuhanordnung (300) einstückig mit der Gierlageranordnung (150) gebildet ist.

8. Die Windturbine von einem der vorhergehenden Ansprüche, wobei die Gleitschuhanordnung (300) mindestens eine friktionsarme Oberfläche (305) umfasst.

9. Die Windturbine von einem der vorhergehenden Ansprüche, wobei die Gleitschuhanordnung (300) ein unitärer Teil ist.

10. Die Windturbine von einem der vorhergehenden Ansprüche, wobei die Gleitschuhanordnung (300) aus mindestens zwei Teilen besteht, wobei einer an dem Hauptrahmen (205) oder dem Turm (215) befestigt ist und der andere an der Gierlageranordnung (150) befestigt ist.

11. Die Windturbine von einem der vorhergehenden Ansprüche, wobei die Gleitschuhanordnung (300) aus mindestens zwei Gleitschuhen (310) besteht, die aneinander gekoppelt sind und die zwischen dem Hauptrahmen (205) oder dem Turm (215) und der Lageranordnung (150) angeordnet sind.

12. Die Windturbine des Anspruchs 11, wobei sie weiterhin einen Stützteil zur Kopplung der Gleitschuhe (310) aneinander umfasst.

13. Die Windturbine von einem der vorhergehenden Ansprüche, wobei die Gleitschuhanordnung (300) an einem Teil des Hauptrahmens (205) befestigt ist, der einem Teil entspricht, in dem die Nabe montiert ist.

## Revendications

1. Une éolienne comprenant:
- une nacelle (200) ayant un châssis principal (205) ;
- un moyeu doué de pales et monté sur la nacelle (200) à rotation ;
- une tour (215) supportant la nacelle (200) à rotation ;
- un ensemble de roulement de lacet (150) fourni entre le châssis principal (205) et la tour (215) ; et
- au moins un ensemble pivotant (100) pour la rotation du châssis principal de la nacelle (205) par rapport à la tour (215), comprenant l'ensemble pivotant (100) un ensemble de patins de glissement (300) disposé en plus de l'ensemble de roulement de lacet (150), dans laquelle l'ensemble de patins de glissement (300) est disposé entre le châssis principal de l'éolienne (205) et une bague de roulement (151) attachée à la tour d'éolienne (215), pour transmettre des charges extrêmes entre le châssis principal (205) et la tour (215),
**caractérisée en ce que** l'ensemble de patins de glissement (300) s'étend radialement couvrant un angle (α) allant de 10 à 90° de la circonférence de l'ensemble de roulement (150) disposé dans une position sur la bague intérieure de roulement (151) correspondant à une partie avant de l'éolienne.

2. L'éolienne de la revendication 1, dans laquelle l'ensemble de patins de glissement (300) est attaché au châssis principal (205) et est capable d'être déplacé par rapport à la bague de roulement (151) attachée à la tour d'éolienne (215).

3. L'éolienne de la revendication 1 ou 2, dans laquelle l'ensemble de roulement (150) est un roulement à billes comprenant une série de billes (153) fournies entre la bague intérieure de roulement (151) et une autre bague extérieure de roulement (152).

4. L'éolienne de l'une quelconque des revendications 1-3, dans laquelle elle inclut en outre un moyen (400) pour ajuster toute espace libre existant entre l'ensemble de patins de glissement (300) et le châssis principal (205) ou la tour (215) ou entre l'ensemble de patins de glissement (300) et l'ensemble de roulement de lacet (150).

5. L'éolienne de l'une quelconque des revendications précédentes, dans laquelle l'ensemble de patins de glissement (300) est adapté pour être ajusté par glissement entre le châssis principal (205) ou la tour (215) et l'ensemble de roulement de lacet (150) permettant une rotation du châssis principal (205) et de la tour (215) l'un par rapport à l'autre.

6. L'éolienne de l'une quelconque des revendications précédentes, dans laquelle l'ensemble de patins de glissement (300) est formé de façon intégrale avec le châssis principal (205) ou la tour (215).

7. L'éolienne de l'une quelconque des revendications précédentes, dans laquelle l'ensemble de patins de glissement (300) est formé de façon intégrale avec l'ensemble de roulement de lacet (150).

8. L'éolienne de l'une quelconque des revendications précédentes, dans laquelle l'ensemble de patins de glissement (300) comprend au moins une surface à faible friction (305).

9. L'éolienne de l'une quelconque des revendications précédentes, dans laquelle l'ensemble de patins de glissement (300) est une pièce unitaire.

10. L'éolienne de l'une quelconque des revendications précédentes, dans laquelle l'ensemble de patins de glissement (300) se compose d'au moins deux parties, une étant fixée au châssis principal (205) ou à la tour (215) et l'autre étant fixée à l'ensemble de roulement de lacet (150).

11. L'éolienne de l'une quelconque des revendications précédentes, dans laquelle l'ensemble de patins de glissement (300) se compose d'au moins deux patins de glissement (310) couplés l'un à l'autre et disposés entre le châssis principal (205) ou la tour (215) et l'ensemble de roulement (150).

12. L'éolienne de la revendication 11, dans laquelle elle comprend en outre une pièce de support pour coupler lesdits patins de glissement (310) l'un à l'autre.

13. L'éolienne de l'une quelconque des revendications précédentes, dans laquelle l'ensemble de patins de glissement (300) est attaché à une partie du châssis principal (205) correspondant à une partie dans laquelle le moyeu est installé.
